# EUROPÄISCHE PATENTSCHRIFT

(11) **EP 1 579 980 B1**
(45) Veröffentlichungstag und Bekanntmachung des Hinweises auf die Patenterteilung: **09.06.2010**
(21) Anmeldenummer: 04030855.3
(22) Anmeldetag: 28.12.2004
(51) Int. Cl.: B29C 49/48

(54) **Hohlkörperblasverfahren und Blasform dafür**
Method for forming hollow articles and blow mould therefor
Procédé de soufflage de corps creux et son moule de soufflage

(30) Priorität: 24.02.2004 AT 2862004
(43) Veröffentlichungstag der Anmeldung: 28.09.2005
(73) Patentinhaber: FRIES PLANUNGS- UND MARKETINGGESELLSCHAFT m.b.H., 6832 Sulz (AT); Friedrich H. Weischede Formenbau GmbH, 46242 Bottrop (DE)
(72) Erfinder: Schaub, Josef, 45964 Gladbeck (DE); Marte, Gerhard, 6833 Klaus (AT); Schatzmann, Daniel, 6800 Nofels (AT)
(74) Vertreter: Hofmann, Ralf U.

(56) Entgegenhaltungen:
- US-A- 4 378 328

## Beschreibung

Die Erfindung betrifft ein Hohlkörperblasverfahren zur Herstellung eines Hohlkörpers, bei welchem ein Schlauch aus einem Kunststoffmaterial in eine Blasform, deren Formhälften zwischen einer geöffneten Stellung und einer geschlossenen Stellung in eine Öffnungs- und Schließrichtung zueinander verfahrbar sind, eingebracht wird und aufgeblasen wird, wobei zumindest eine der Formhälften mindestens zwei in eine Verschieberichtung senkrecht zur Öffnungs- und Schließrichtung der Formhälften zwischen einer auseinandergefahrenen Stellung und einer zusammengefahrenen Stellung zueinander verfahrbare Formteile aufweist, die sich zunächst in ihrer auseinandergefahrenen Stellung befinden und in der Folge vor dem Öffnen der Formhälften in ihre zusammengefahrene Stellung gebracht werden, wobei gegenüberliegende Abschnitte einer in eine seitliche Erweiterung des Formhohlraums, welche zwischen einander zugewandten stirnseitigen Flächen der beiden Formteile liegt, sich erstreckenden Ausbuchtung des Schlauchs zusammengepresst werden. Weiters betrifft die Erfindung eine Blasform für ein Hohlkörperblasverfahren.

Das Hohlkörperblasverfahren, auch Extrusionsblasen genannt, ist ein übliches und weit verbreitetes Verfahren zur Herstellung von Hohlkörpern, insbesondere Behältern aus thermoplastischen Kunststoffen. Hierbei wird üblicherweise ein Schlauch aus einem thermoplastischen Kunststoffmaterial extrudiert und in eine Blasform eingebracht, wobei er sich in einem aufgrund seiner Erhitzung verformbaren, zähflüssigen Zustand befindet, und in der Folge mittels eines Blasdorns aufgeblasen. Nach dem Blasvorgang und dem Öffnen der Blasform kann der gegebenenfalls noch nachzubearbeitende Hohlkörper, insbesondere durch Stanzvorgänge, entnommen werden.

Es ist weiters bereits bekannt geworden, die Formhälften in zwei (oder mehrere) in Richtung senkrecht zur Öffnungs- und Schließrichtung der Formhälften gegeneinander verfahrbare Formteile zu trennen. Hierbei besitzt eines der beiden Formteile einen in Verschieberichtung reichenden Fortsatz, der je nach gegenseitiger Stellung der beiden Formteile mehr oder weniger weit in eine Ausnehmung des anderen Formteils ragt. Der Formhohlraum besitzt im Bereich zwischen stirnseitigen Flächen der beiden Formteile eine seitliche Erweiterung, deren Ausdehnung in Verschieberichtung der beiden Formteile sich beim Zusammenfahren der beiden Formteile verringert. Der im Formhohlraum sich befindende Schlauch wird im auseinandergefahrenen Zustand der beiden Formteile aufgeblasen, so dass er sich an die Wände des Formhohlraums legt, wobei eine Ausbuchtung des Schlauches in die seitliche Erweiterung des Formhohlraums ragt (und hierbei an den Wänden der seitlichen Erweiterung anliegt). In der Folge werden die Formteile in ihre zusammengefahrene Stellung gebracht, wobei die in die seitliche Erweiterung des Formhohlraums ragende Ausbuchtung des Schlauchs zusammengepresst und die zusammengepressten Abschnitte der Ausbuchtung miteinander verbunden werden. Auf diese Weise können u.a. am Hohlkörper außen umlaufende Verstärkungsflansche ausgebildet werden. Ein derartiges Hohlkörperblasverfahren ist beispielsweise aus der US 4,378,328 A und der US 3,050,773 A bekannt. In der letzteren Schrift ist auch ein Ausführungsbeispiel gezeigt, bei welchem aus dem außen umlaufenden Verstärkungsflansch nach dem Blasverfahren Grifföffnungen ausgestanzt werden. Es ist hierbei weiters auch die Möglichkeit gezeigt, den außen umlaufenden Flansch so weit wegzustanzen, dass nur mehr zwei seitlich abstehende Griffe stehen bleiben.

Nachteilig bei diesem herkömmlichen Hohlkörperblasverfahren mit zwei gegeneinander verfahrbaren Formteilen von zumindest einer der Formhälften ist es, dass beim Zusammenfahren der beiden Formteile Kunststoffmaterial aus dem Bereich der seitlichen Erweiterungen des Formhohlraums nach innen in Richtung des Hauptbereichs des Formhohlraums gedrückt wird, wenn die in der seitlichen Erweiterung liegende Ausbuchtung des Schlauchs zusammengepresst wird. Es kommt daher in diesem Bereich zu einer Materialanhäufung der Seitenwand des Hohlkörpers und zwar auf der im Inneren des Hohlkörpers liegenden Seite der Seitenwand. Diese Materialanhäufung ist beim Aufschneiden des Hohlkörpers als stark verdickter Schweißnahtbereich ersichtlich, wobei es zu einer um so stärkeren Materialanhäufung kommt, je näher die beiden Formteile im zusammengefahrenen Zustand aufeinander zu bewegt werden. Diese Materialanhäufung führt nicht nur zu einer Erhöhung des Materialbedarfs, sondern auch zu einer unerwünschten Erhöhung des Gewichts des fertiggestellten Hohlkörpers.

Aufgabe der Erfindung ist es, ein verbessertes Hohlkörperblasverfahren der eingangs genannten Art bereitzustellen, durch welches beim hergestellten Hohlkörper eine Gewichtseinsparung erzielt wird. Erfindungsgemäß gelingt dies durch ein Verfahren mit den Merkmalen des Patentanspruchs 1.

Durch den sogar noch im zusammengefahrenen Zustand der Formteile vorhandenen Freiraum, d.h. vom Kunststoffmaterial des Schlauchs nicht angefüllten Bereich, der seitlichen Erweiterung kommt es beim Zusammenfahren der beiden Teile der Formhälfte zu einem zumindest geringeren Rückfluss von Kunststoffmaterial aus dem Bereich der seitlichen Erweiterung in den Hauptbereich des Formhohlraums, wodurch ungewünschte Materialanhäufungen in der Seitenwand des Hohlkörpers zumindest verringert werden können. Auch kann sich das Kunststoffmaterial der in die seitliche Erweiterung ragenden Ausbuchtung beim Aufblasen zumindest in eine Richtung frei ausdehnen, liegt also in diese Richtung bis zum Ende des Aufblasens nicht an einer Begrenzungswand des Formhohlraums an. Hierdurch kann ebenfalls die Wanddickenverteilung des fertiggestellten Hohlkörpers positiv beeinflusst werden.

Der erfindungsgemäße an die Ausbuchtung des Schlauchs angrenzende oder von dieser eingeschlossene Freiraum in der seitlichen Erweiterung des Formhohlraums wird durch eine geeignete Größe der seitlichen Erweiterung des Formhohlraums im auseinandergefahrenen und im zusammengefahrenen Zustand der Formteile in Verbindung mit einer geeigneten Wahl von weiteren Verfahrensparametern, insbesondere des Einblasdruckes im Inneren des Schlauchs beim Zusammenfahren der Formteile (in Abhängigkeit von der Verformbarkeit des Kunststoffmaterials) erreicht.

In einer vorteilhaften Ausführungsform der Erfindung ist vorgesehen, dass in einem Bereich der seitlichen Erweiterung, in welchem an die Hohlkörperwand ein Abfallstück angrenzt, vorzugsweise in allen solchen Bereichen, zumindest eine der beiden einander zugewandten stirnseitigen Flächen der Formteile eine das Abfallstück an seinem Ansatz zur Hohlkörperwand zusammenquetschende Quetschkante aufweist. Es wird dadurch das Abtrennen des Abfallstücks (durch Abstanzen, Abschneiden, Abreißen usw.) nach dem Entnehmen des Hohlkörpers aus der Blasform wesentlich erleichtert bzw. kann das Abfallstück bereits durch die Quetschkante vom Hohlkörper abgetrennt werden. Weiters wird dadurch der Rückfluss von Material aus der seitlichen Erweiterung in denjenigen Bereichen, in welchen Abfallstücke des Hohlkörpers liegen, weiter verringert.

Freiflächen bei Hohlkörperblasformen sind zwar an sich bekannt, allerdings in ganz anderen Zusammenhängen. So sind in Richtung der Extrusion des Schlauches in der Trennebene zwischen den beiden Formhälften immer an Quetschkanten für den Schlauch anschließende Freiflächen vorhanden. Dies geht beispielsweise aus der JP 08-066958 A hervor, wobei hier die beiden Formflächen zusätzlich voreilende Backen aufweisen, die den Schlauch vor dem vollständigen Zusammenfahren der Form bereits zusammendrücken. Dadurch kann der Druck im Schlauch gehalten werden, wenn eine Einblasnadel seitlich in den Schlauch eingestochen wird. Durch eine solche seitlich in den Schlauch eingestochene Einblasnadel kann bei der Einrichtung dieser Schrift eine gleichmäßigere Wanddickenverteilung bei einem stark asymmetrischen Körper erreicht werden.

Aus der JP 08-216244 A geht weiters ein Einblasverfahren hervor, bei welchem der extrudierte Schlauch im Bereich unterhalb der noch geöffneten Formhälften geschlossen wird und der Schlauch frei bis zu einer geeigneten Größe aufgeblasen wird und anschließend die Formhälften gegen den eingeblasenen Schlauch geschlossen werden. Es kann dadurch ein Hohlkörper ohne Einblasloch erzeugt werden. Ein derartiges Verfahren ist auch unter der Bezeichnung "Einblasverfahren mit gestützter Luft" bekannt. In der Trennebene der Formhälften sind hier auch quer zur Extrusionsrichtung liegende Freiflächen vorhanden, die an Quetschkanten anschließen, sodass der Schlauch beim Schließen der Form nicht aufplatzt.

Weitere Vorteile und Einzelheiten der Erfindung werden im Folgenden anhand der beiliegenden Zeichnung erläutert. In dieser zeigen:
- Fig. 1: eine Ansicht einer Formhälfte einer Blasform in der auseinandergefahrenen Stellung der beiden Formteile;
- Fig. 2: einen Schnitt entlang der Linie A-A von Fig. 1;
- Fig. 3: eine Ansicht entsprechend Fig. 1 in der zusammengefahrenen Stellung der beiden Formteile;
- Fig. 4: einen Schnitt entsprechend Fig. 2 in der zusammengefahrenen Stellung der beiden Formteile;
- Fig. 5: eine Teildarstellung in einem Schnitt entlang der Linie B-B von Fig. 2, wobei der Blasdorn und der in den Formhohlraum eingebrachte Schlauch schematisch dargestellt sind;
- Fig. 6: eine weiteren Teildarstellung in einem Schnitt entlang der Linie B-B von Fig. 2;
- Fig. 7: einen Schnitt entsprechend Fig. 5, aber im zusammengefahrenen Zustand der beiden Formteile;
- Fig. 8: einen Schnitt entsprechend Fig. 6, aber im zusammengefahrenen Zustand der beiden Formteile;
- Fig. 9: eine perspektivische Darstellung eines mit einem erfindungsgemäßen Hohlkörperblasverfahren hergestellten Behälters;
- Fig.10: ein weiteres Ausführungsbeispiel eines solchen Behälters.

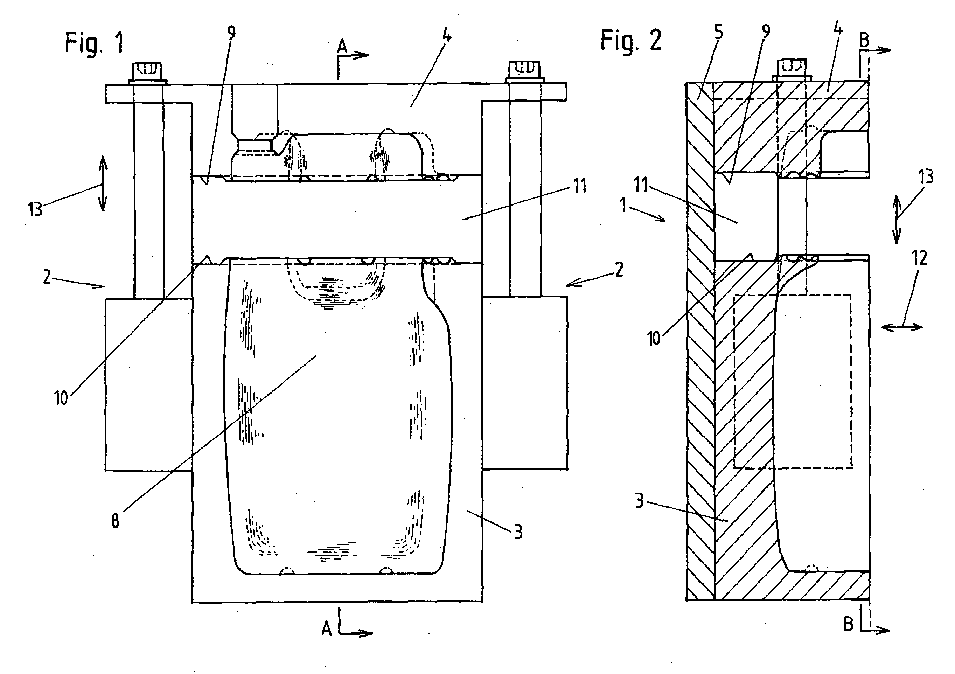

Das Ausführungsbeispiel der in den Fig. 1 bis 8 dargestellten Formhälfte 1 einer Blasform zur Ausführung des erfindungsgemäßen Verfahrens besitzt zwei mittels Kolben-Zylinder-Einheiten 2 gegeneinander verfahrbare Formteile 3, 4. Im gezeigten Ausführungsbeispiel ist das untere Formteil 3 ortsfest angeordnet, zu welchem Zweck es an einer Formaufspannplatte 5 festgelegt ist, während das obere Formteil 4 als ein mittels der Kolben-Zylinder-Einheiten 2 verschiebbarer Schieber ausgeführt ist. Es wäre auch denkbar und möglich, beide Formteile 3, 4 verschiebbar zu lagern. Anstelle der Kolben-Zylinder-Einheiten 2 könnten auch andere Antriebsmittel vorgesehen sein.

Die in den Figuren nicht dargestellte andere Formhälfte kann beispielsweise im Wesentlichen spiegelbildlich zur dargestellten Formhälfte 1 ausgebildet sein. Hierbei können entsprechende Eingriffsvorsprünge (nicht dargestellt in den Figuren) an den Formteilen 3, 4 der einen Formhälfte 1 im geschlossenen Zustand der beiden Formhälften in Vertiefungen in der anderen Formhälfte eingreifen, wodurch auch die Bewegung der verschiebbaren Formteile 4 synchronisiert wird. Prinzipiell wäre es auch denkbar und möglich, dass nur eine der beiden Formhälften zueinander verschiebbare Formteile 3, 4 aufweist.

Die Formhälfte 1 begrenzt zusammen mit der anderen, in den Figuren nicht dargestellten Formhälfte einen Formhohlraum. Der Formhohlraum besitzt einen Hauptbereich 8, der im zusammengefahrenen Zustand der beiden Formteile 3, 4 von von der Formtrennebene 7 ausgehenden Ausnehmungen in den Formhälften 1 gebildet wird, und eine zwischen einander zugewandten stirnseitigen Flächen 9, 10 der Formteile 3, 4 liegende seitliche Erweiterung 11. Das Volumen der seitlichen Erweiterung 11 im zusammengefahrenen Zustand der beiden Formteile 3, 4 beträgt vorzugsweise zumindest weniger als die Hälfte des Volumens der seitlichen Erweiterung 11 im auseinandergefahrenen Zustand der beiden Formteile 3, 4.

Die Öffnungs- und Schließrichtung der beiden Formhälften ist in Fig. 2 durch den Doppelpfeil 12 angedeutet. Es können hierbei eine oder beide Formhälften beweglich sein. Die Verschieberichtung zwischen den beiden Formteilen 3, 4 (im gezeigten Ausführungsbeispiel des Formteils 4 gegenüber dem Formteil 3) ist durch den Doppelpfeil 13 dargestellt.

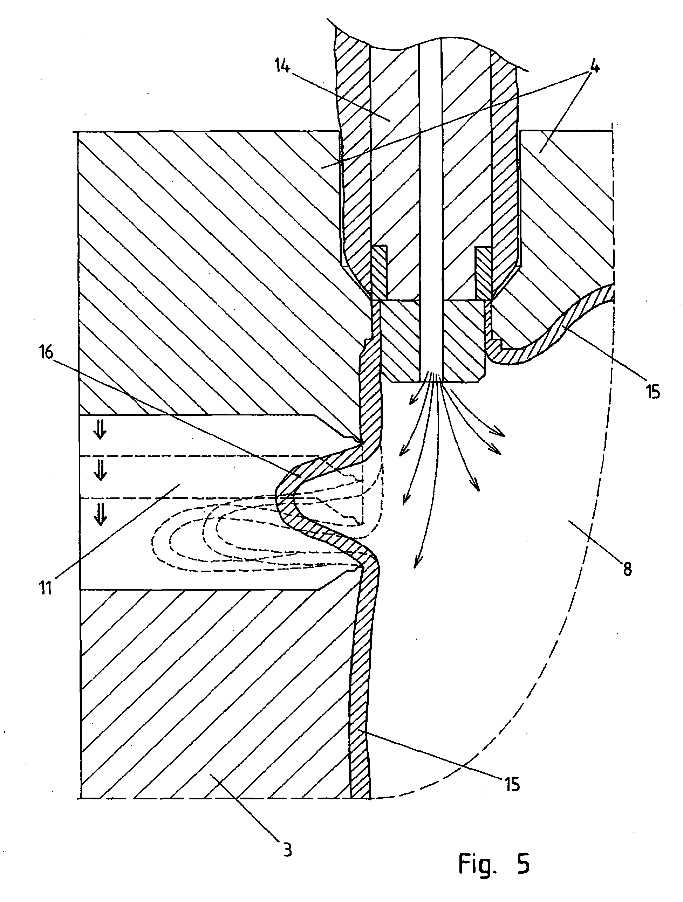

Beim erfindungsgemäßen Hohlkörperblasverfahren wird zunächst, wie dies von herkömmlichen Hohlkörperblasverfahren hinreichend bekannt ist und daher hier nicht im Einzelnen beschrieben werden muss, ein Schlauch aus einem thermoplastischen Material aus einem in den Figuren nicht dargestellten Extruder extrudiert und in den Hauptbereich 8 des Formhohlraums 6 eingebracht, wobei die beiden Formhälften zusammengefahren werden. Die Formteile 3, 4 befinden sich hierbei zunächst in ihrer auseinandergefahrenen Stellung, wie diese in den Fig. 1 und 2 dargestellt ist. In der Folge wird mittels eines Blasdorns 14 ein Blasmedium, vorzugsweise Luft in das Innere des mit Ausnahme seiner Einblasöffnung nunmehr geschlossenen Schlauchs 15 eingeblasen, wie dies in Fig. 5 schematisch dargestellt ist. Der Schlauch wird dabei aufgeblasen und legt sich an die Wände des Hauptbereichs 8 des Formhohlraums an. Weiters beginnt sich eine Ausstülpung bzw. Ausbuchtung 16 des Schlauchs in die seitliche Erweiterung 11 hinein zu erstrecken. Diese Ausbuchtung 16 verläuft um den gesamten Umfang des Schlauchs (da im gezeigten Ausführungsbeispiel die seitliche Erweiterung 11 sich um den gesamten Umfang des Hauptbereichs 8 erstreckt).

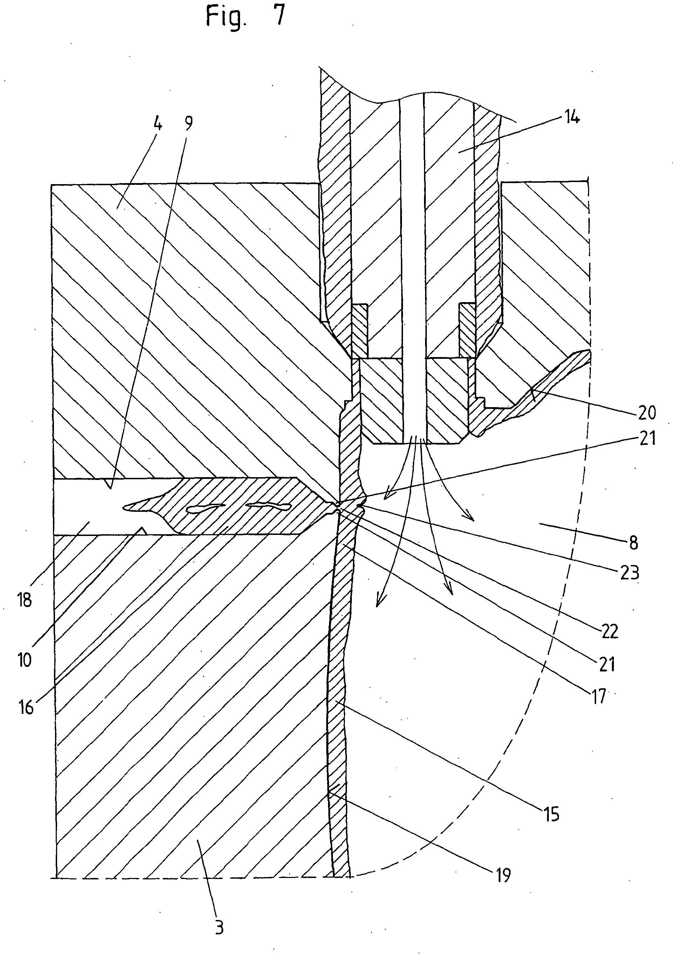

Wenn etwa die in Fig. 5 mit durchgehenden Linien dargestellte Form des Schlauchs erreicht ist, wird das Zusammenfahren der Formteile 3, 4 begonnen. Der Druck innerhalb des Schlauchs 15 kann hierbei beibehalten werden oder es kann weiter Blasmedium eingeblasen werden. In Fig. 5 sind zwei Zwischenschritte zwischen der auseinandergefahrenen Stellung und der vollständig zusammengefahrenen Stellung durch strichlierte Linien angedeutet, wobei die jeweils zugehörige Form des Schlauchs ebenfalls durch strichlierte Linien angedeutet ist. Fig. 7 zeigt schließlich die vollständig zusammengefahrene Stellung der beiden Formteile 3, 4. Die gegenüberliegenden oberen und unteren Abschnitte der in die seitliche Erweiterung 11 ragenden Ausbuchtung 16 des Schlauchs 15 sind hierbei annähernd vollständig zusammengepresst worden und bilden in diesem Teilstück der umfänglichen Erstreckung der Ausbuchtung 16 ein Abfallstück, auch Butzen genannt. Aus Fig. 7 ist ersichtlich, dass an die in die zusammengepresste Ausbuchtung 16 des Schlauchs 15 auf ihrer vom Hauptbereich 8 des Formhohlraums abgelegenen Seite ein Freiraum 18, d.h. ein nicht mit Kunststoffmaterial gefüllter Bereich, der seitlichen Erweiterung 11 angrenzt.

Der an den Wänden 19, 20 der Formteile 3, 4, die den Hauptbereich 8 des Formhohlraums begrenzen, anliegende Teil des Schlauchs 15 bildet die Hohlkörperwand 17 des herzustellenden Hohlkörpers. Vorzugsweise weisen die beiden stirnseitigen Flächen 9, 10 der Formteile 3, 4, die die seitliche Erweiterung 11 in denjenigen Bereich begrenzen, in welchem ein Abfallstück an die Hohlkörperwand 17 anschließt, Quetschkanten 21 auf, die das Abfallstück an seinem Ansatz zur Hohlkörperwand 17 zusammenquetschen. Es wird dadurch ein nur sehr dünner Steg 22 gebildet, der das Abfallstück mit der Hohlkörperwand 17 verbindet, so dass das Abfallstück leicht von der Hohlkörperwand 17 abgetrennt werden kann. Denkbar und möglich wäre es auch, dass die Quetschkanten 21 das Abfallstück bereits vollständig vom herzustellenden Hohlkörper abtrennen. Anstelle von Quetschkanten 21 an beiden stirnseitigen Flächen 9, 10 wäre auch eine Quetschkante nur an einer dieser beiden Flächen denkbar und möglich.

Aus Fig. 7 ist weiters ersichtlich, dass im Bereich der dem Abfallstück benachbarten Naht 23 in der Hohlkörperwand 17 nur eine sehr geringe Materialanhäufung vorliegt. Vorzugsweise ist die Dicke der Hohlkörperwand 17 im Bereich der Naht 23 zumindest weniger als doppelt so dick wie in den von der Naht 23 abgelegenen Bereichen.

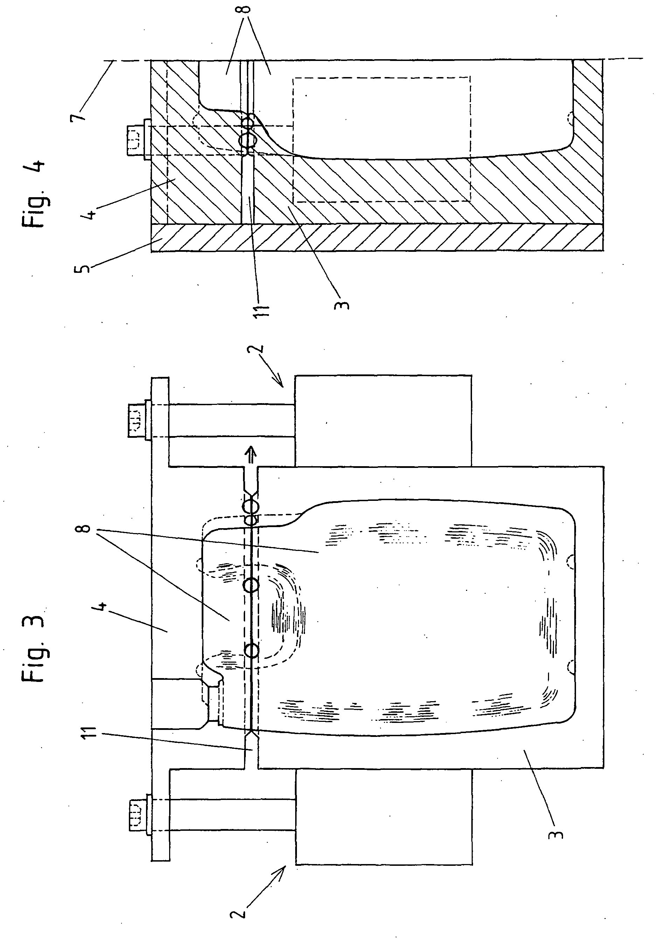

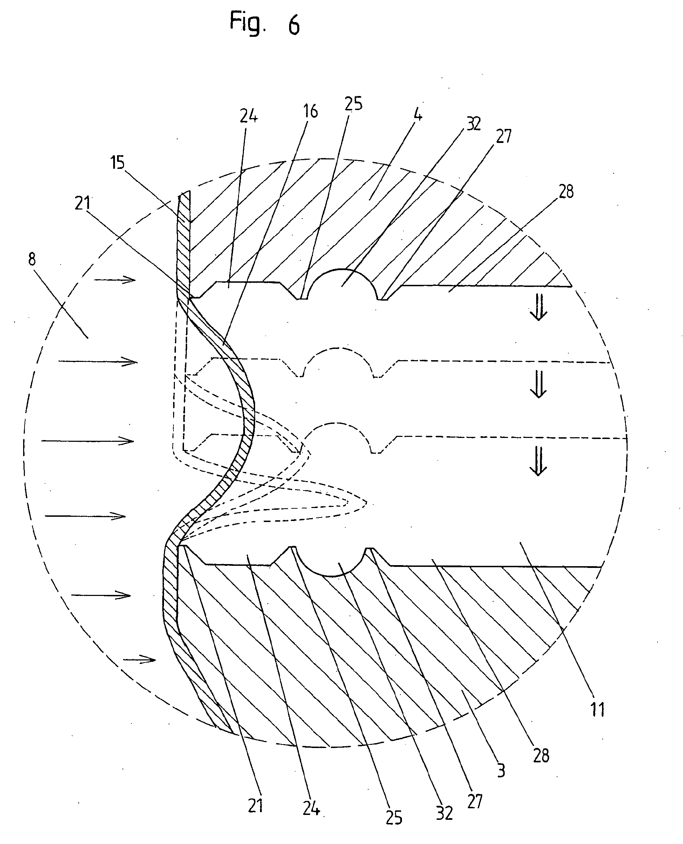

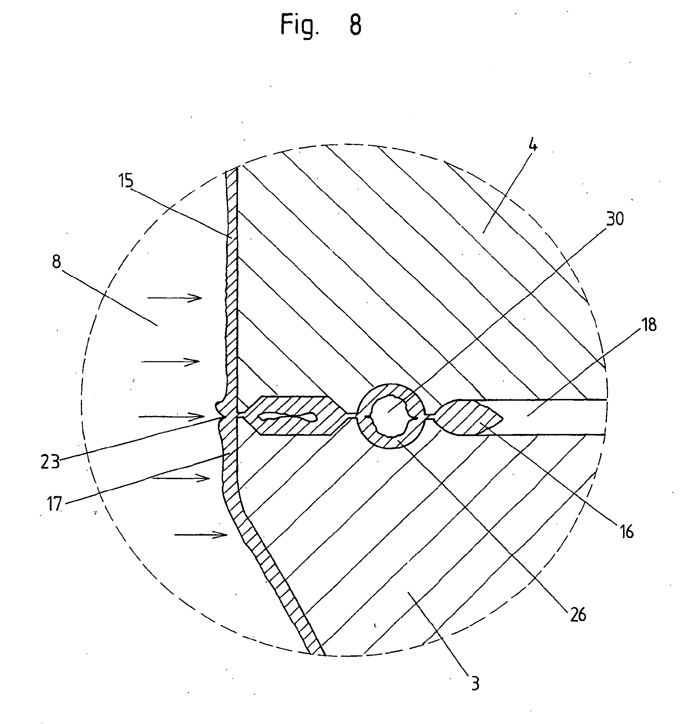

Die Fig. 5 und 7 stellen den in Fig. 1 bzw. Fig. 3 auf der linken Seite liegenden Abschnitt der Formhälfte 1 im Bereich der seitlichen Erweiterung 11 dar, während die Fig. 6 und 8 den in Fig. 1 bzw. Fig. 3 auf der rechten Seite gelegenen Abschnitt der Formhälfte 1 im Bereich der seitlichen Erweiterung 11 schematisch zeigen, und zwar wiederum bei der Herstellung eines Hohlkörpers. In Fig. 6 ist wiederum der auseinandergefahrene Zustand der beiden Formteile 3, 4 mit dem bereits eine in die seitliche Erweiterung 11 reichende Ausbuchtung 16 aufweisenden Schlauch 15 dargestellt, wobei in der Folge die beiden Formteile 3, 4 zusammengefahren werden, wie dies wiederum durch die strichlierten Linien dargestellt ist. Der vollständig zusammengefahrene Zustand der beiden Formhälften ist in Fig. 8 dargestellt. Die beiden Formteile 3, 4 weisen ausgehend vom Hauptbereich 8 des Formhohlraums 6 zunächst jeweils eine Quetschkante 21 auf. Es folgen Vertiefungen 24, die ein erstes Abfallstück aufnehmen. Nach weiteren Quetschkanten 25 folgen im Schnitt gesehen halbkreisförmige Ausnehmungen 22, die zusammen eine kreisförmige Ausnehmung bilden, von denen ein Griff 26 des Hohlkörpers gebildet wird. Anschließend an weitere Quetschkanten 27 folgen Vertiefungen 28, die ein zweites Abfallstück aufnehmen. Auf der vom Hauptbereich 8 des Formhohlraums abgewandten Seite der Ausbuchtung 16 liegt in der zusammengefahrenen Stellung der beiden Formteile 3, 4 (Fig. 8) ein vom Kunststoffmaterial freier Freiraum 18 innerhalb der seitlichen Erweiterung 11.

Der obere und der untere Abschnitt der in die seitliche Erweiterung 11 ragenden Ausbuchtung 16 sind hier nur teilweise zusammengepresst und miteinander verbunden. Im Bereich des Griffs 26 ist ein Hohlraum 30 verblieben.

Nach dem Entformen des Hohlkörpers werden die Abfallstücke entfernt, wobei ein freistehender Griff 26 zurückbleibt. Die Naht 23 an der Stelle, an der das Abfallstück 24 angrenzt, weist wiederum nur eine geringe Materialanhäufung auf.

Im gezeigten Ausführungsbeispiel erstrecken sich die Freiräume 18 bis zur Außenseite der Formhälften 1, sind also zum Außenraum hin offen. Die Freiräume könnten auch von einer Wand der Formhälfte 1 begrenzt sein (an welche sich während keiner der Schritte des Verfahrens Kunststoffmaterial anlegt). Anstelle des geradlinigen Verlaufs der Freiräume 18 könnten diese auch einen anderen Verlauf aufweisen. Es wäre auch denkbar und möglich, dass sich der Freiraum nicht auf der vom Hauptbereich 8 abgewandten Seite der Ausbuchtung erstreckt, sondern in Fig. 7 oder 8 beispielsweise oberhalb oder unterhalb eines Abfallstücks der Ausbuchtung liegt. Weiters prinzipiell denkbar und möglich wäre es auch, in der zusammengefahrenen Stellung der Formteil 3, 4 den Freiraum innerhalb des von der Ausbuchtung 16 umschlossenen Bereichs vorzusehen, d.h. die Ausbuchtung 16 weist dann einen entsprechend großen Hohlraum auf, dessen Ausdehnung vorzugsweise in alle Richtungen mindestens die Hälfte der Dicke der Wandstärke der Ausbuchtung beträgt. Bevorzugt ist es aber, dass zumindest auf ein an die Ausbuchtung angrenzender, d.h. außerhalb des von ihr umschlossenen Bereichs liegender Freiraum vorgesehen wird. Dieser Freiraum soll sich vorzugsweise über die gesamte Umfangsausdehnung der Ausbuchtung 16 bzw. der seitlichen Erweiterung 11 des Formhohlraums erstrecken.

In der zusammengefahrenen Stellung der Formteile 3, 4 ist der Abstand zwischen den stirnseitigen Flächen 9, 10 der Formteile 3, 4, zwischen denen die seitliche Erweiterung 11 liegt, zumindest bereichsweise kleiner als der Verschiebeweg zwischen der auseinandergefahrenen und der zusammengefahrenen Stellung. Hierbei ist der Abstand zwischen den stirnseitigen Flächen 9, 10 in der zusammengefahrenen Stellung zumindest bereichsweise weniger als halb so groß wie in der auseinandergefahrenen Stellung.

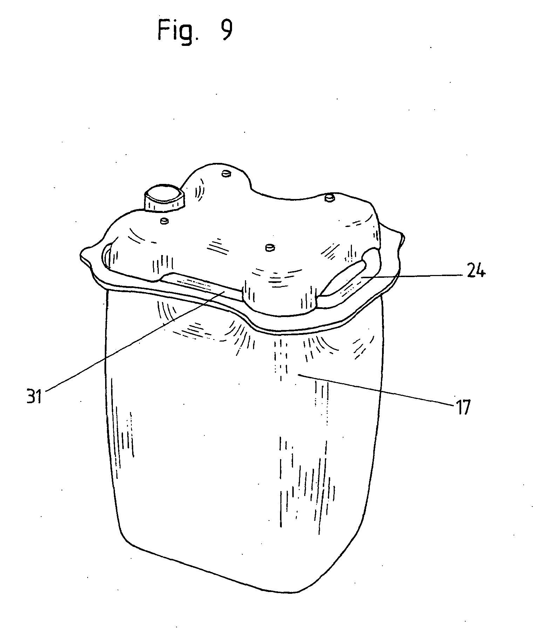

Fig. 9 zeigt einen mit zwei spiegelbildlichen Formhälften entsprechend den Fig. 1 bis 8 hergestellten Hohlkörper in Form eines Kanisters, wobei die Abfallstücke noch nicht entfernt sind. Nach dem Entfernen dieser Abfallstücke besitzt der Kanister freistehende Griffe 26, 31, die in der beschriebenen Weise ausgebildet werden. Im Bereich dieser Griffe 26, 31 besitzt die Hohlkörperwand Vertiefungen, so dass die Griffe 26, 31 nicht über die Außenkontur des Hohlkörpers vorstehen, sondern innerhalb derselben liegen. Aus Fig. 9 ist auch ersichtlich, dass die äußeren Ränder der Abfallstücke einen unregelmäßigen Verlauf aufweisen (aufgrund der an sie anschließenden Freiräume 18 bei der Herstellung). Bevorzugterweise wird ein um den gesamten Umfang des Hohlkörpers verlaufendes Abfallstück mit einem unregelmäßigen äußeren Rand ausgebildet, welches entweder bei der Herstellung durch die Quetschkanten der Formteile 3, 4 oder nach der Entformung abgetrennt wird.

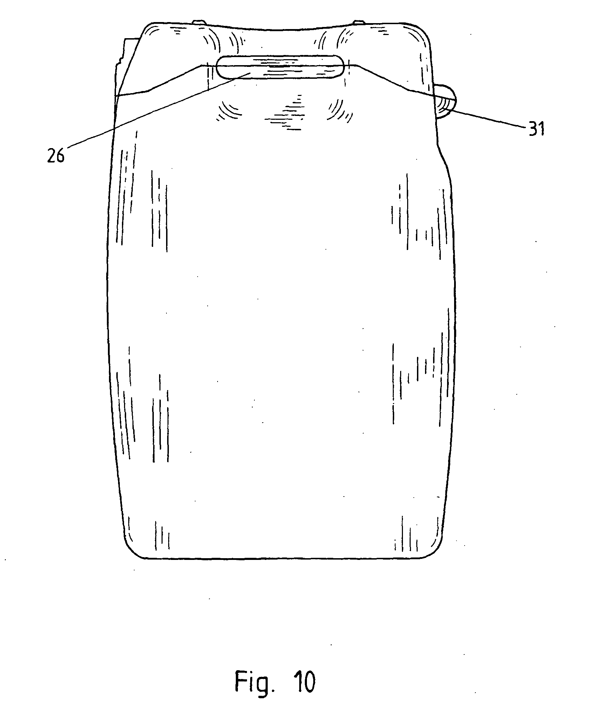

Ein ähnliches Ausführungsbeispiel ist in Fig. 10 dargestellt. Hier grenzen die beiden Formteile 3, 4 im zusammengefahrenen Zustand nicht in einer Ebene aneinander an, sondern die Trennlinie zwischen den beiden Formteilen 3, 4 weist zueinander geneigte Flächen auf, wie aus den schräg verlaufenden Abschnitten der Naht 23 ersichtlich ist.

Die Vorteile der Erfindung liegen insbesondere in der wesentlichen Reduzierung von unregelmäßigen Materialanhäufungen in der Hohlkörperwand. Es wird vielmehr eine regelmäßige Naht 23 ausgebildet.

Unterschiedliche Modifikationen der beschriebenen Ausführungsbeispiele sind denkbar und möglich ohne den Bereich der Erfindung zu verlassen. Beispielsweise kann zumindest eine der Formhälften 1 auch mehrere Paare von zueinander verschiebbaren Formteilen 3, 4 aufweisen.

### Legende

### zu den Hinweisziffern:

- 1: Formhälfte
- 2: Kolben-Zylinder-Einheit
- 3: Formteil
- 4: Formteil
- 5: Formaufspannplatte

- 7: Formtrennebene
- 8: Hauptbereich
- 9: stirnseitige Fläche
- 10: stirnseitige Fläche
- 11: seitliche Erweiterung
- 12: Öffnungs- und Schließrichtung
- 13: Verschieberichtung
- 14: Blasdorn
- 15: Schlauch
- 16: Ausbuchtung

- 17: Hohlkörperwand
- 18: Freiraum
- 19: Wand
- 20: Wand
- 21: Quetschkante
- 22: Steg
- 23: Naht
- 24: Vertiefung
- 25: Quetschkante
- 26: Griff
- 27: Quetschkante
- 28: Vertiefung
- 29: Ausnehmung
- 30: Hohlraum
- 31: Griff

## Patentansprüche

1. Hohlkörperblasverfahren zur Herstellung eines Hohlkörpers, bei welchem ein Schlauch (15) aus einem Kunststoffmaterial in eine Blasform, deren Formhälften (1) zwischen einer geöffneten Stellung und einer geschlossenen Stellung in eine Öffnungs- und Schließrichtung (12) zueinander verfahrbar sind, eingebracht wird und aufgeblasen wird, wobei zumindest eine der Formhälften (1) mindestens zwei in eine Verschieberichtung (13) senkrecht zur Öffnungs- und Schließrichtung der Formhälften (1) zwischen einer auseinandergefahrenen Stellung und einer zusammengefahrenen Stellung zueinander verfahrbare Formteile (3, 4) aufweist, die sich zunächst in ihrer auseinandergefahrenen Stellung befinden und in der Folge vor dem Öffnen der Formhälften (1) in ihre zusammengefahrene Stellung gebracht werden, wobei gegenüberliegende Abschnitte einer in eine seitliche Erweiterung (11) des Formhohlraums, welche zwischen einander zugewandten stirnseitigen Flächen (9, 10) der beiden Formteile (3, 4) liegt, sich erstreckenden Ausbuchtung (16) des Schlauchs (15) zusammengepresst werden, **dadurch gekennzeichnet, dass** in der zusammengefahrenen Stellung der Formteile (3, 4) ein an die in die seitliche Erweiterung (11) des Formhohlraums sich erstreckende Ausbuchtung (16) des Schlauchs (15) angrenzender oder von dieser Ausbuchtung (16) eingeschlossener Freiraum (18) innerhalb der seitlichen Erweiterung (11) freigelassen wird.

2. Hohlkörperblasverfahren nach Anspruch 1, **dadurch gekennzeichnet, dass** der Freiraum (18) auf der vom Hauptbereich (8) des Formhohlraums abgelegenen Seite der Ausbuchtung (16) an diese angrenzt.

3. Hohlkörperbfasverfahren nach Anspruch 1 oder Anspruch 2, **dadurch gekennzeichnet, dass** zumindest ein Abschnitt der in die seitliche Erweiterung (11) sich erstreckenden Ausbuchtung (16) des Schlauchs (15) ein Abfallstück bildet.

4. Hohlkörperblasverfahren nach einem der Ansprüche 1 bis 3, **dadurch gekennzeichnet, dass** zumindest ein Abschnitt der in die seitliche Erweiterung (11) sich erstreckenden Ausbuchtung (16) des Schlauchs (15) einen, vorzugsweise freistehenden, Griff (26, 31) des Hohlkörpers bildet.

5. Hohlkörperblasverfahren nach Anspruch 4, **dadurch gekennzeichnet, dass** zumindest ein Abfallstück zwischen der Hohlkörperwand (17) des herzustellenden Hohlkörpers und dem Griff (26, 31) ausgebildet wird,-welches in der Folge entfernt wird.

6. Hohlkörperblasverfahren nach einem der Ansprüche 4 oder 5, **dadurch gekennzeichnet, dass** sich die seitliche Erweiterung (11) auf der vom Hauptbereich (8) des Formhohlraums abgelegenen Seite des Griffs (26, 31) weiter nach außen erstreckt.

7. Hohlkörperblasverfahren nach einem der Ansprüche 1 bis 6, **dadurch gekennzeichnet, dass** in einem Bereich der seitlichen Erweiterung (11), in welchem an die Hohlkörperwand (17) des herzustellenden Hohlkörpers ein Abfallstück angrenzt, vorzugsweise in allen solchen Bereichen, zumindest eine der beiden einander zugewandten stirnseitigen Flächen (9, 10) der Formteile (3, 4) eine das Abfallstück an seinem Ansatz zur Hohlkörperwand {17} zusammenquetschende Quetschkante (21) aufweist.

8. Hohlkörperblasverfahren nach einem der Ansprüche 1 bis 7, **dadurch gekennzeichnet, dass** die seitliche Erweiterung (11) sich bis zur Außenseite der Formhälfte (1) erstreckt, vorzugsweise in eine vom Hauptbereich (8) des Formhohlraums radial nach außen verlaufende Richtung.

9. Hohlkörperblasverfahren nach einem der Ansprüche 1 bis 8, **dadurch gekennzeichnet, dass** sich der Freiraum (18) über die gesamte Umfangserstreckung der seitlichen Erweiterung (11) erstreckt.

10. Blasform für ein Hohlkörperblasverfahren zur Herstellung eines Hohlkörpers aus einem aus einem Kunststoffmaterial bestehenden Schlauch, mit zwischen einer geöffneten Stellung und einer geschlossenen Stellung zueinander verfahrbaren Formhälften (1), von denen zumindest eine mindestens zwei in eine Verschieberichtung (13) senkrecht zur Öffnungs- und Schließrichtung (12) der Formhälften (1) zwischen einer auseinandergefahrenen Stellung und einer zusammengefahrenen Stellung gegeneinander verfahrbare Formteile (3, 4) aufweist; wobei der Formhohlraum eine zwischen stirnseitigen Flächen (8, 9) der Formteile (3, 4) liegende seitliche Erweiterung zur Aufnahme einer Ausbuchtung (16) des Schlauchs besitzt, **dadurch gekennzeichnet, dass** zur Ausbildung eines Freiraums (18), der in der zusammengefahrenen Stellung der Formteile (3, 4) an die Ausbuchtung (16) des Schlauchs angrenzt oder von dieser Ausbuchtung (16) eingeschlossen wird, die seitliche Erweiterung (11) bis zur Außenseite der Formhälfte (1) verläuft, vorzugsweise in Richtung einer Geraden.

## Claims

1. A hollow-body blowing process for producing a hollow body, in which a hose (15) of a plastics material is introduced into a blowing mould, whose mould halves (1) are movable with respect to one another in an opening direction and closing direction (12) between an opened position and a closed position, and is inflated, wherein at least one of the mould halves (1) has at least two mould parts (3, 4) movable with respect to one another, in a displacement direction (13) perpendicular to the opening and closing direction of the mould halves (1), between a moved-apart position and a moved-together position, which mould parts (3, 4) are first of all located in their moved-apart position and are subsequently, before opening of the mould halves (1), brought into their moved-together position, wherein opposite portions of a bulge (16), extending into a lateral mould-cavity widening (11) lying between facing front-face surfaces (9, 10) of the two mould parts (3, 4), of the hose (15) are pressed together, **characterised in that** in the moved-together position of the mould parts (3, 4), a free space (18), adjoining the bulge (16), extending into the lateral widening (11) of the mould cavity, of the hose (15) or enclosed by this bulge (16) is left free within the lateral widening (11).

2. A hollow-body blowing process according to claim 1, **characterised in that** the free space (18) adjoins the bulge (16) at the side thereof remote from the main region (8) of the mould cavity.

3. A hollow-body blowing process according to claim 1 or claim 2, **characterised in that** at least one portion of the bulge (16), extending into the lateral widening (11), of the hose (15) forms a waste piece.

4. A hollow-body blowing process according to any one of claims 1 to 3, **characterised in that** at least a portion of the bulge (16), extending into the lateral widening (11), of the hose (15) forms a, preferably self-supporting, grip (26, 31) of the hollow body.

5. A hollow-body blowing process according to claim 4, **characterised in that** at least one waste piece is formed between the hollow-body wall (17) of the hollow body to be manufactured and the grip (26, 31), which waste piece is subsequently removed.

6. A hollow-body blowing process according to one of claims 4 and 5, **characterised in that** the lateral widening (11) extends further outwards at that side of the grip (26, 31) remote from the main region (8) of the mould cavity.

7. A hollow-body blowing process according to any one of claims 1 to 6, **characterised in that** in a region of the lateral widening (11) in which a waste piece adjoins the hollow-body wall (17) of the hollow body to be manufactured, preferably in all such regions, at least one of the two facing front-face surfaces (9, 10) of the mould parts (3, 4) has a pinch-off edge (21) squeezing together the waste piece at its attachment with respect to the hollow-body wall (17).

8. A hollow-body blowing process according to any one of claims 1 to 7, **characterised in that** the lateral widening (11) extends as far as the exterior of the mould half (1), preferably in a direction running radially outwards from the main region (8) of the mould cavity.

9. A hollow-body blowing process according to any one of claims 1 to 8, **characterised in that** the free space (18) extends over the entire circumferential extension of the lateral widening (11).

10. A blowing mould for a hollow-body blowing process for manufacturing a hollow body from a hose of a plastics material, having mould halves (1) movable with respect to one another between an opened position and a closed position, of which at least one of the mould halves (1) has at least two mould parts (3, 4) movable with respect to one another, in a displacement direction (13) perpendicular to the opening and closing direction (12) of the mould halves (1), between a moved-apart position and a moved-together position, wherein the mould cavity has a lateral widening, lying between front-face surfaces (9, 10) of the mould parts (3, 4), to receive a bulge (16) of the hose (15), **characterised in that** to form a free space (18), adjoining the bulge (16) of the hose (15) or enclosed by this bulge (16) in the moved-together position of the mould parts (3, 4), the lateral widening (11) runs as far as the exterior of the mould half (1), preferably in the direction of a straight line.

## Revendications

1. Procédé de soufflage de corps creux pour la fabrication d'un corps creux selon lequel,
on introduit un tube (15) en matière plastique dans un moule de soufflage dont les moitiés (1) peuvent être déplacées l'une par rapport à l'autre entre une position ouverte et une position fermée dans une direction d'ouverture et une direction de fermeture (12), pour être gonflées,
au moins l'une des moitiés de moule (1) ayant deux parties de moule (3, 4) mobiles l'une par rapport à l'autre dans une direction de coulissement (13) perpendiculaire à la direction d'ouverture et de fermeture des moitiés de moule (1), entre une position écartée et une position rapprochée, ces parties de moule se trouvant tout d'abord dans leur position écartée et elles sont conduites dans leur position rapprochée avant l'ouverture des moitiés de moule (1),
les segments opposés d'une hernie (16) du tube (15), déployée dans une extension latérale (11) de la cavité du moule, située entre les surfaces frontales en regard (9, 10) des deux parties de moule (3, 4), étant comprimés,
**caractérisé en ce que**
dans la position réunie des parties de moule (3, 4), on laisse libre un espace (18) adjacent à la hernie (16) du tube (15) dans l'extension latérale (11) de la cavité du moule ou (18) enfermé par la hernie (16) dans l'extension latérale (11).

2. Procédé de soufflage de corps creux selon la revendication 1,
**caractérisé en ce que**
l'espace libre (18) est adjacent à la hernie (16) du côté non tourné vers la zone principale (8) du corps creux.

3. Procédé de soufflage de corps creux selon la revendication 1 ou 2,
**caractérisé en ce qu'**
au moins un segment de la hernie (16) du tube (15) s'étendant dans l'extension latéral (11), est un déchet à mettre au rebut.

4. Procédé de soufflage de corps creux selon l'une des revendications 1 à 3,
**caractérisé en ce qu'**
au moins un segment de la hernie (16) du tube (15) qui s'étend dans l'extension latérale (11), forme une poignée (26, 31) de préférence dégagée du corps creux.

5. Procédé de soufflage de corps creux selon la revendication 4,
**caractérisé en ce qu'**
au moins un déchet est réalisé entre la paroi (17) du corps creux à fabriquer et la poignée (26, 31), ce déchet étant ensuite enlevé.

6. Procédé de soufflage de corps creux selon la revendication 4 ou 5,
**caractérisé en ce que**
l'extension latérale (11) s'étend plus loin vers l'extérieur sur le côté de la poignée (26, 31) non tourné vers la zone principale (8) de la cavité du moule.

7. Procédé de soufflage de corps creux selon l'une des revendications 1 à 6,
**caractérisé en ce que**
dans une zone de l'extension latérale (11) dans laquelle un déchet est adjacent à la paroi (17) du corps creux à réaliser, de préférence dans toutes les zones, au moins l'une des surfaces frontales (9, 10) des parties de moule (3, 4), tournées l'une vers l'autre, a un déchet sur un prolongement de l'arête écrasée (21) à son amorce sur la paroi (17) du corps creux.

8. Procédé de soufflage de corps creux selon l'une des revendications 1 à 7,
**caractérisé en ce que**
l'extension latérale (11) s'étend jusqu'au côté extérieur de la moitié de moule (1) de préférence dans une direction radialement tournée vers l'extérieur à partir de la zone principale (8) de la cavité du moule.

9. Procédé de soufflage de corps creux selon l'une des revendications 1 à 8,
**caractérisé en ce que**
l'espace libre (18) s'étend sur toute la périphérie de l'extension latérale (11).

10. Moule de soufflage pour un procédé de soufflage de corps creux servant à fabriquer un corps creux à partir d'un tube en matière plastique à l'aide de moitiés de moule (1) mobiles l'une par rapport à l'autre entre une position fermée et une position ouverte, et au moins l'une des moitiés de moule, comporte au moins deux parties de moule (3, 4) mobiles l'une par rapport à l'autre entre une position déployée et une position réunie dans une direction de coulissement (13) perpendiculaire à la direction d'ouverture et de fermeture (12) des moitiés de moule (1),
la cavité du moule ayant une extension latérale située entre les faces frontales (8, 9) des parties de moule (3, 4) pour recevoir une hernie (16) du tube,
moule **caractérisé en ce que**
pour réaliser un espace libre (18) adjacent à la hernie (16) du tube dans la position réunie des parties de moule (3, 4) ou qui est enfermé par cette cavité (16), l'extension latérale (11) s'étend jusqu'au côté extérieur de la moitié de moule (1) de préférence dans la direction d'une droite.
